# EUROPEAN PATENT SPECIFICATION

(11) **EP 4 336 587 B1**
(45) Date of publication and mention of the grant of the patent: **27.08.2025**
(21) Application number: 23181710.7
(22) Date of filing: 27.06.2023
(51) Int. Cl.: H01M 4/14, H01M 4/20, H01M 4/62, H01M 10/06, H01M 4/68, H01M 4/74, H01M 10/12, H01M 50/417, H01M 50/437, H01M 50/44, H01M 50/48, H01M 50/491, H01M 4/73

(54) **LEAD-ACID BATTERY ELECTRODE PLATE AND METHOD FOR MAKING THEREOF, AND LEAD-ACID BATTERY**
BLEISÄUREBATTERIE-ELEKTRODENPLATTE UND VERFAHREN ZU IHRER HERSTELLUNG SOWIE BLEISÄUREBATTERIE
PLAQUE D'ÉLECTRODE DE BATTERIE AU PLOMB-ACIDE ET SON PROCÉDÉ DE FABRICATION, ET BATTERIE AU PLOMB-ACIDE

(30) Priority: 29.06.2022 US 202263356490 P
(43) Date of publication of application: 13.03.2024
(73) Proprietor: National Formosa University, Yunlin County 632 (TW)
(72) Inventor: HSIEH, Shu-Huei, 632 Yunlin County (TW); WU, Huai-Jen, 632 Yunlin County (TW); HSIEH, Chu-Ting, 632 Yunlin County (TW); XIAO, Cun-Hao, 632 Yunlin County (TW); LIN, You-Cheng, 632 Yunlin County (TW); YAN, Zhi-Xuan, 632 Yunlin County (TW); LIN, Jyun-Wei, 632 Yunlin County (TW); HSIEH, Chia-Yu, 632 Yunlin County (TW); LIU, Bo-Jun, 632 Yunlin County (TW); LI, Shang-Rong, 632 Yunlin County (TW)
(74) Representative: Cabinet Chaillot

(56) References cited:
- US-A1- 2012 244 429
- US-A1- 2016 372 727

## Description

### CROSS REFERENCE TO RELATED APPLICATION

This application claims the benefit of U.S. Provisional Application Ser. No. 63/356,490, filed June 29, 2022.

### FIELD OF THE INVENTION

The present invention relates to lead electrode plate structure and a method for making thereof, especially related to using non-metallic material to make an electrode plate for manufacturing a lead-acid battery. The present invention also relates to an art for preventing lead-acid battery from lead (II) sulfate crystal growth piercing and enhancing the battery formation efficiency

### BACKGROUND

Regarding conventional lead-acid battery manufacturing, the aqueous sulfuric acid solution immersing the electrode plate stack is prone to have chemical reaction with the electrode plate within the cassette. The chemical reaction leads to that sulfuric acid concentration in central area of the electrode plate is lower than that in the surrounding area, which eventually results in issues of pure hydration in central area of the electrode plate. Pure hydration in central area of the electrode plate makes it easier for lead sulfate to dissolve into the aqueous sulfuric acid, and crystalize on the electrode plate to grow lead dendrite. The lead dendrites gradually bridge between the electrode plates and eventually cause short circuit of the battery.

Electrode plate stack prepared by stacking conventional electrode plates creates insufficient porosity for air permeability from one plate to another. Taking continuous lead paste coating process for example, the electrode plate surface is covered by a lead paste paper so as to prevent lead paste coated upon the electrode plate from sticking to other battery components such as another electrode plate or a separator. However, currently-used lead paste paper for continuous lead paste coating process could not provide sufficient air permeability. When aqueous sulfuric acid solution is poured into the lead-acid battery, gas and heat produced in chemical reaction between the aqueous sulfuric acid solution and the electrode plate cannot dissipate rapidly through the conventional lead paste paper. In addition, in high capacity lead-acid battery, such as lead-acid battery having capacity above 50Ah or 100Ah, the size of their electrode plates are often larger than those in a conventional lead-acid battery. Larger-sized electrode plates render it difficult for the aqueous sulfuric acid solution in central area of the electrode plate to reach an equilibrium in terms of concentration with the aqueous sulfuric acid solution in the surrounding area through convective diffusion. During charge and discharge process, pure hydration tends to be observed in central area of the larger-sized electrode plate such that lead sulfate is dissolved and attached to the lead paste paper or the separator. The attached lead sulfate attracts more lead microparticles to grow into lead dendrite. The continuously growing lead dendrite pierces through the separator and bridge between positive and negative electrode plates, causing battery short circuit. Documents US2016/372727 and US2012/244429 disclose similar lead-acid batteries to that of the current application.

### SUMMARY

Confronted with the aforementioned technological issues in the prior arts, there is an urgent need to develop an electrode plate capable of reducing lead sulfate crystallization and suppressing lead dendrite growth in order to prolong lifespan and increase operational efficiency of the lead-acid battery. In one aspect, the present invention discloses a lead-acid battery electrode plate for preventing lead sulfate dendrite growth and enhancing batter formation efficiency, comprising: a electricity collector layer provided to be an electricity channel; a first air-permeable layer comprising a non-metallic sheet material and provided on one side of the electricity collector layer; a second air-permeable layer comprising a non-metallic sheet material and provided on other side of the electricity collector layer in a corresponding manner to the first air-permeable layer, wherein the non-metallic sheet material has a porous structure to be air-permeable channels, and the first air-permeable layer is the same to or different from the second air-permeable layer. The broadest scope of the current invention is defined by current independent claim 1 (lead-acid battery electrode plate) and current independent claim 6 (method of making said electrode plate)

Preferably, the porous structure comprises one or more interwoven layers, and the interwoven layers are prepared by interweaving a plurality of latitudinal threads and a plurality of longitudinal threads, wherein an intersection angle formed between any one of the latitudinal threads intersecting with any one of the longitudinal threads is an acute angle or an obtuse angle.

Preferably, the porous structure comprises an electrical conductive material, a corrosion-resistant material or a combination thereof, wherein the electrical conductive material comprises one or more materials selected from a group consisting of electrical conductive polymers, nanocarbon, graphite and graphene; the corrosion-resistant material comprises one or more materials selected from a group consisting of polypropylene fiber, polyethylene fiber, polyester fiber, nylon fiber, aramid fiber, polyvinyl chloride fiber, acrylic fiber, viscose fiber, glass fiber, spandex fiber, carbon fiber, polyacrylate fiber and polyimide fiber.

Preferably, wherein the porous structure is a fabric braid comprising a fabric braid woven from long electrical conductive fiber materials, a fabric braid woven from long electrical conductive fiber materials and short electrical conductive fiber materials, a fabric braid woven from long corrosion-resistant fiber materials, a fabric braid woven from long corrosion-resistant fiber materials and short corrosion-resistant fiber materials, a fabric braid woven from long electrical conductive fiber materials and long corrosion-resistant fiber materials, or a fabric braid woven from long corrosion-resistant fiber materials, short corrosion-resistant fiber materials, and long corrosion-resistant fiber materials, short corrosion-resistant fiber materials.

Preferably, the porous structure comprises a electrical conductive materials, a corrosion-resistant material or a combination thereof, wherein the electrical conductive materials is selected from a group consisting of electrical conductive polymers, nanocarbon, graphite and graphene; the corrosion-resistant material is glass fiber.

In another aspect, the present invention discloses a lead-acid battery comprising: a seal case; an electrode plate stack, sealed in the seal case, comprising: a separator; a positive electrode plate comprising the aforementioned lead-acid battery electrode plate, provided on one side of the separator; a negative electrode plate comprising the aforementioned lead-acid battery electrode plate, provided on the other side of the separator in a corresponding manner to the positive electrode plate; and an electrolyte solution, sealed in the seal case and immersing the electrode plate stack, dissolving acidic electrolyte.

In one another aspect, the present invention discloses a method for making an lead-acid battery electrode plate comprising: placing one first non-metallic sheet material and one second non-metallic sheet material on two sides of the electricity collector layer in a respective manner so as to obtain the lead-acid battery electrode plate, wherein the first non-metallic sheet material and the second non-metallic sheet material have porous structures to be air-permeable channels of a first air-permeable layer and a second air-permeable layer, and the first air-permeable layer is the same as or different from the second air-permeable layer.

Preferably, wherein the porous structure comprises one or more interwoven layers, the interwoven layers are made by interweaving a plurality of latitudinal threads and a plurality of longitudinal threads, wherein an intersection angle formed between any one of the latitudinal threads intersecting with any one of the longitudinal threads is an acute angle or an obtuse angle.

Preferably, wherein before obtaining the lead-acid battery electrode plate, the method further comprising exerting a pressure on the lead-acid battery electrode plate so as to laminate the electricity collector layer, the first non-metallic sheet material and the second non-metallic sheet material in a more intense manner.

Preferably, the method comprises using a roller to exert the pressure on the first non-metallic sheet material-the electricity collector layer-the second non-metallic sheet material composite so as to obtain the lead-acid battery electrode plate.

Preferably, wherein the porous structure comprises a electrical conductive materials, a corrosion-resistant material or a combination thereof, wherein the electrical conductive materials comprises one or more materials selected from a group consisting of electrical conductive polymers, nanocarbon, graphite and graphene; the corrosion-resistant material comprises one or more materials selected from a group consisting of polypropylene fiber, polyethylene fiber, polyester fiber, nylon fiber, aramid fiber, polyvinyl chloride fiber, acrylic fiber, viscose fiber, glass fiber, spandex fiber, carbon fiber, polyacrylate fiber and polyimide fiber.

Preferably, he porous structure comprises a electrical conductive materials, a corrosion-resistant material or a combination thereof, wherein the electrical conductive materials is selected from a group consisting of electrical conductive polymers, nanocarbon, graphite and graphene; the corrosion-resistant material is glass fiber.

In yet one another aspect, the present invention discloses a lead-acid battery comprising: a seal case; an electrode plate stack, sealed in the seal case, comprising: a separator; a positive electrode plate comprising a lead-acid battery electrode plate made by the aforementioned method, provided on one side of the separator; a negative electrode plate comprising a lead-acid battery electrode plate made by the aforementioned method, provided on the other side of the separator in a corresponding manner to the positive electrode plate; and an electrolyte solution, sealed in the seal case and immersing the electrode plate stack, dissolving acidic electrolyte.

The lead-acid electrode plate disclosed herein enhances air permeability of the lead-acid electrode plate itself. Gases which is produced during electrochemical reaction are more efficiently ventilated. Vulcanization on the lead-acid electrode plate is reduced so that short circuit of the battery due to lead dendrite growth is also suppressed. Meanwhile, electrical conductive materials are added to the non-metallic sheet materials, which benefits conductivity, electric capacity and formation efficiency. The corrosion-resistant materials ameliorates pure hydration issues in the central area of the electrode plate. Overall, the lead-acid battery can be more quickly put into subsequent applications, and battery lifespan is also significantly prolonged.

### BRIEF DESCRIPTIONS OF DRAWINGS

FIG. 1A is a cross-sectional plot illustrating the structure of a lead-acid battery electrode plate;
FIG. 1B is an explosion diagram illustrating the structure of a lead-acid battery electrode plate;
FIGs. 1C to 1D are cross-sectional plots illustrating plate cassette comprising the lead-acid battery electrode plate;
FIGs. 2A to 2F illustrate various embodiments of the porous structure;
FIGs. 3A to 3B are cross-sectional plots exemplifying the structure of lead-acid battery;
FIG. 3C is a stereoscopic explosion diagram illustrating the determination of geometric center of the lead-acid battery electrode plate;
FIGs. 3D to 3E is a cross-sectional plot exemplifying the ventilation effect of the lead-acid battery plate on working condition;
FIG. 4A is a flowchart illustrating the method for making the lead-acid battery electrode plate;
Fig. 4B is a schematic diagram illustrating a continuous roller manufacturing process of the lead-acid battery electrode plate in one example;
FIG. 5 is a schematic diagram of sampling point for testing variation of electrolyte concentration in proximal area of the electrode plate in experimental example 1;
FIG. 6A is an observing view of surface crystallization on the lead-acid battery electrode plate after charge and discharge in embodiment 1; and
FIG. 6B is an observing view of surface crystallization on the lead-acid battery electrode plate after charge and discharge in comparative example 1.

### DETAILED DESCRIPTION

The following is a description of the structure and usage of various components of the present invention through several exemplary implementations, aiming to provide a detailed explanation of the features of the present invention. However, these embodiments are only intended to illustrate the core essence of the present invention and should not be construed as limiting the implementation of the present invention.

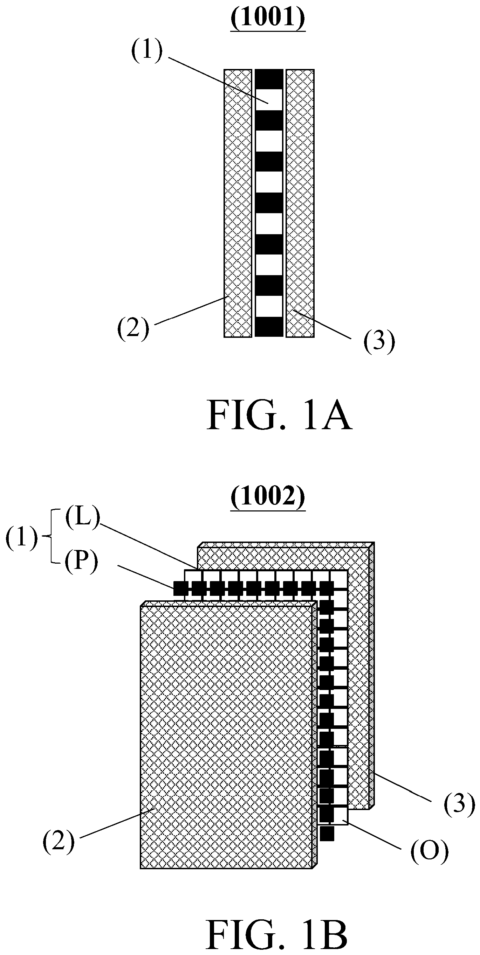

Please refer to FIG. 1A illustrating a lead-acid battery electrode plate (100) provided in the present invention, comprising: a electricity collector layer (1) provided to be an electricity channel; a first air-permeable layer (2) comprising a non-metallic sheet material and provided on one side of the electricity collector layer; a second air-permeable layer (3) comprising a non-metallic sheet material and provided on other side of the electricity collector layer (1) in a corresponding manner to the first air-permeable layer (2), wherein the non-metallic sheet material has a porous structure to be air-permeable channels, and the first air-permeable layer (2) is the same to or different from the second air-permeable layer (3).

Normally when a lead-acid battery is in use, vulcanization tends to be observed in the surface of a lead-acid battery electrode plate, which results from electrochemical reaction between the electrolyte solution and the lead-acid battery electrode plate, and such a situation is hard to avoid. Major reasons of surface vulcanization include large current discharge, deep discharge, not-timely charge, frequently charge or charge within overly short period. In the present invention, enhancement of air permeability in the lead-acid electrode plate (100) not only increases ventilation of hydrogen and oxygen produced during charge and discharge, but also prevents battery damages caused by swelling pressure from the battery interiority. In addition, surface vulcanization of the lead-acid battery electrode plate (100) can also be reduced, which suppresses lead dendrite growth that penetrates the adjacent separator.

In various embodiments, as shown in FIG. 1B, the electricity collector layer (1) can be a lead grid (L) coated with lead paste (P) so as to increase electrical conductivity, electric capacity and charging performance of the lead-acid battery electrode plate (100). Practically, the lead paste (P) comprises but not limited to lead powder, sodium lignosulfonate, short-fiber barium sulfate, and carbon materials such as carbon black or graphene. The lead paste (P) can be prepared by mixing water, thin sulfuric acid and the materials as mentioned hereinabove. In some embodiments, the electricity collector layer (1) can be a unformed electrode plate, and any electrode plate that is not yet initiated by formation process can be the electricity collector layer (1), wherein the formation process is a well-known technique in the field of endeavor and will not be elaborated here.

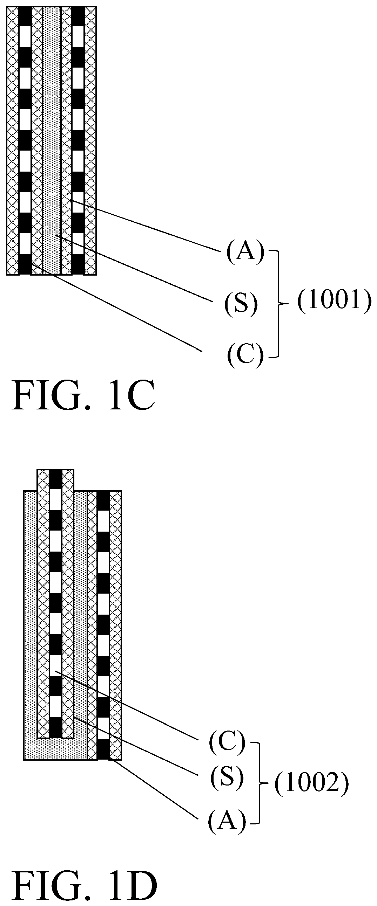

In various embodiments, as shown in FIG. 1C, in an electrode plate stack (1001) comprising the lead-acid battery electrode plate (100), the lead-acid battery electrode plate (100) is the negative plate (A) provided on one side of a positive plate (C), wherein at least one separator (S) is provided between the positive plate (C) and the negative plate (A).

In other embodiments, as shown in FIG. 1D, in an electrode plate stack (1002) comprising the lead-acid battery electrode plate (100), the stacking of the electrode plates is similar to that of the electrode plate stack (1002), but the separator (S) wraps the positive plate (C) in a U shape, wherein the positive plate (C) can be the lead-acid battery electrode plate (100), or can be one lead-acid battery electrode plate made by any known craft.

To improve ventilation property of the electrode plate during an electrochemical reaction, the air-permeable layer facing the separator (S) requires higher air permeability. Preferably, the second air-permeable layer (3) having higher air permeability faces the separator (S), wherein the air permeability of the second air-permeable layer (3) is higher than the air permeability of the first air-permeable layer (2). In particular, the air permeability is determined by averaged concentration of the electrolyte solution before and after the lead-acid battery electrode plate (100) is immersed in the electrolyte solution. When difference of averaged electrolyte concentrations nearby central area of the lead-acid electrode plate (100) before and after electrolyte solution immersion is smaller, it indicates that the air-permeable layers (1, 2) have higher porosity. Such improvement of ventilation addresses pure hydration issues in central area of the plate. On the contrary, when difference of averaged electrolyte concentrations nearby central area of the lead-acid electrode plate (100) before and after electrolyte solution immersion is larger, it indicates that the air-permeable layers (1, 2) have less porosity, which is unfavorable for ventilation and leads to pure hydration issues in central area of the electrode plate. Eventually, lead dendrite tends to grow on the electrode plate during an electrochemical reaction.

To give the lead-acid battery electrode plate (100) the air permeability as mentioned hereinabove, in various embodiments, the porous structure is a fiber braid, comprising one or more interwoven layers. The interwoven layers are prepared by interweaving a plurality of latitudinal threads and a plurality of longitudinal threads, wherein an intersection angle formed between any one of the latitudinal threads intersecting with any one of the longitudinal threads is an acute angle or an obtuse angle. In particular, the acute angle measures between 0 to 90 degrees, but not 0 degree. The obtuse angle measures between 90 to 180 degrees, but not 90 degrees or 180 degrees. Preferably, the latitudinal threads and the longitudinal threads can be long fibers, short fibers or any combination thereof. More preferably, a plurality of pores of various sizes are formed in the interwoven layers by random weaving the long fibers and the short fibers. The pores connects to each other and forms multiple air-permeable channels when the interwoven layers are stacked together to form the porous structure. The air-permeable channels enhance the air permeability of the porous structure. On the other hand, to avoid adverse effects on the air permeability of the porous structure, during formation of the porous structure, no crosslinking agent or binding agent is added because such additives would fill in the channels so that the air permeability is reduced.

In some embodiments, thickness of the first air-permeable layer (2) ranges from 0.1 to 0.4 mm, and thickness of the second air-permeable layer (3) ranges from 0.1 to 0.4 mm; preferably, thickness of the first air-permeable layer (2) ranges from 0.2 to 0.3 mm, and thickness of the second air-permeable layer (3) ranges from 0.2 to 0.3 mm.

In the above embodiments, to improve formation efficiency of the lead-acid battery, the non-metallic sheet material is made of electrical conductive materials having high electrical conductivity. The electrical conductive materials can be exemplified by electrical conductive polymers, activated carbon, nanocarbon, graphite or graphene. The electrical conductive polymers can be polyacetylene-based polymers, polyparastyrene-based polymers, polyaniline, polypyrrol-based polymers, polyfluorene-based polymers, polyparaphenylene sulfide, polybenzazole-based polymers, polycarbazole-based polymers, polyazulene-based polymers, polynaphthyl polymers, polythiophene-based polymers, polythiophene-vinylidene polymers, or derivatives of any one thereof. In preferred embodiments, the electrical conductive materials are manufactured into electrical conductive fiber materials such as activated carbon fibers, nanocarbon fibers, graphite fibers or graphene fibers, and the interwoven layers are prepared by interweaving the electrical conductive fiber materials as the longitudinal threads and the latitudinal threads. In more preferred embodiments, the electrical conductive materials are manufactured into electrical conductive cloth materials such as carbon fiber cloth, carbon nanotube fiber cloth, activated carbon cloth and graphene fiber cloth.

The "formation efficiency" is for evaluation of activation efficiency of a lead-acid battery in initial charge and discharge. During the initial electrical charge of the lead-acid battery, a passivated film is formed on the surface of either the positive electrode or the negative electrode, whereas the positive electrode having a thinner passivated film is not further discussed. The passivated film is formed by consuming lead ions of the electrode plate when a chemical reaction is triggered between the electrolyte solution and the electrode plate. For example, lead sulfate is produced and forms a thin film blocking electrons and electrolyte solution. Formation efficiency is critical for lead-acid battery performance. Generally speaking, the lead-acid battery is charged using constant current and constant voltage methods, such as charging at rates of 0.1C, 0.2C or 0.3C, to evaluate whether the voltage consistency of lead-acid battery meets desired requirement during constant current charging. During formation process, the lead-acid battery produces gas in an electrochemical reaction. While at a particular voltage, a passivated film forms on the surface of negative electrode so that reductive reaction of the electrolyte solution is suppressed, and gas production also is decreased dramatically.

In order to ventilate the gas produced in the aforementioned chemical reaction from surfaces of the electrode plates, the non-metallic sheet material is made by interweaving non-electrical conductive corrosion-resistant materials and the electrical conductive materials. The corrosion-resistant materials can be exemplified by polypropylene, polyethylene, polyester, nylon, aramid, polyvinyl chloride, acrylic, viscose, glass, spandex, polyacrylate, or polyimide; preferably, the corrosion-resistant materials are manufactured into corrosion-resistant fiber materials such as polypropylene fiber, polyethylene fiber, polyester fiber, nylon fiber, aramid fiber, polyvinyl chloride fiber, acrylic fiber, viscose fiber, glass fiber, spandex fiber, carbon fiber, polyacrylate fiber and polyimide fiber. The corrosion-resistant fiber materials are subsequently interwoven as the longitudinal threads and the latitudinal threads into the interwoven layers, or the corrosion-resistant fiber materials and the electrical conductive fiber materials are taken as the longitudinal fibers and the latitudinal fibers, respectively, and interwoven into the interwoven layers, but not limited to this.

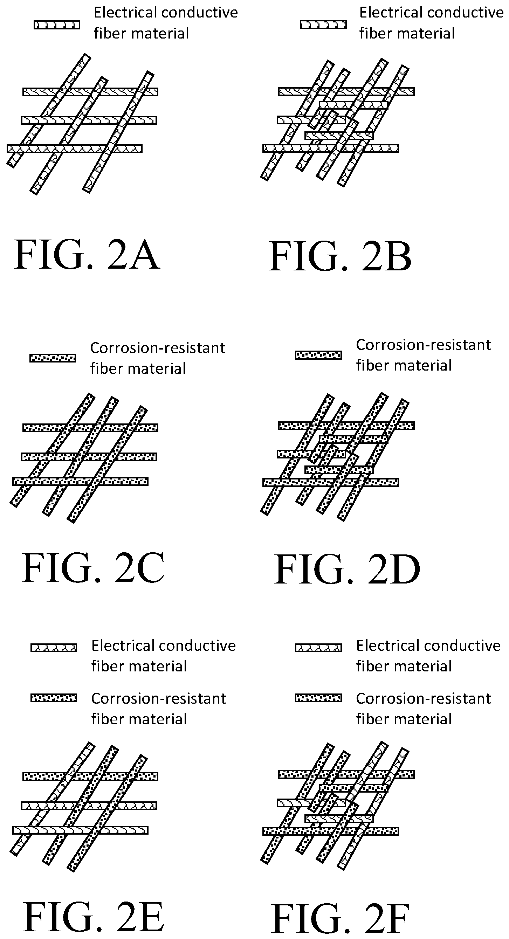

Please refer to FIGs. 2A to 2F illustrating several examples of the porous structure. The porous structure is a fabric braid woven from long electrical conductive fiber materials (Fig. 2A), a fabric braid woven from long electrical conductive fiber materials and short electrical conductive fiber materials (Fig. 2B), a fabric braid woven from long corrosion-resistant fiber materials (Fig. 2C), a fabric braid woven from long corrosion-resistant fiber materials and short corrosion-resistant fiber materials (Fig. 2D), a fabric braid woven from long electrical conductive fiber materials and long corrosion-resistant fiber materials (Fig. 2E), or a fabric braid woven from long corrosion-resistant fiber materials, short corrosion-resistant fiber materials, and long corrosion-resistant fiber materials, short corrosion-resistant fiber materials (Fig. 2F), but not limited to this.

In some embodiments, the non-metallic sheet material comprises 1.00 to 5.50wt% the electrical conductive materials and 0.10 to 2.00wt% the corrosion-resistant materials. Preferably, the non-metallic sheet material comprises 1.50 to 5.00wt% the electrical conductive materials and 0.20 to 1.50wt% the corrosion-resistant materials. More preferably, the non-metallic sheet material comprises 1.80 to 4.70wt% the electrical conductive materials and 0.25 to 1.25wt% the corrosion-resistant materials.

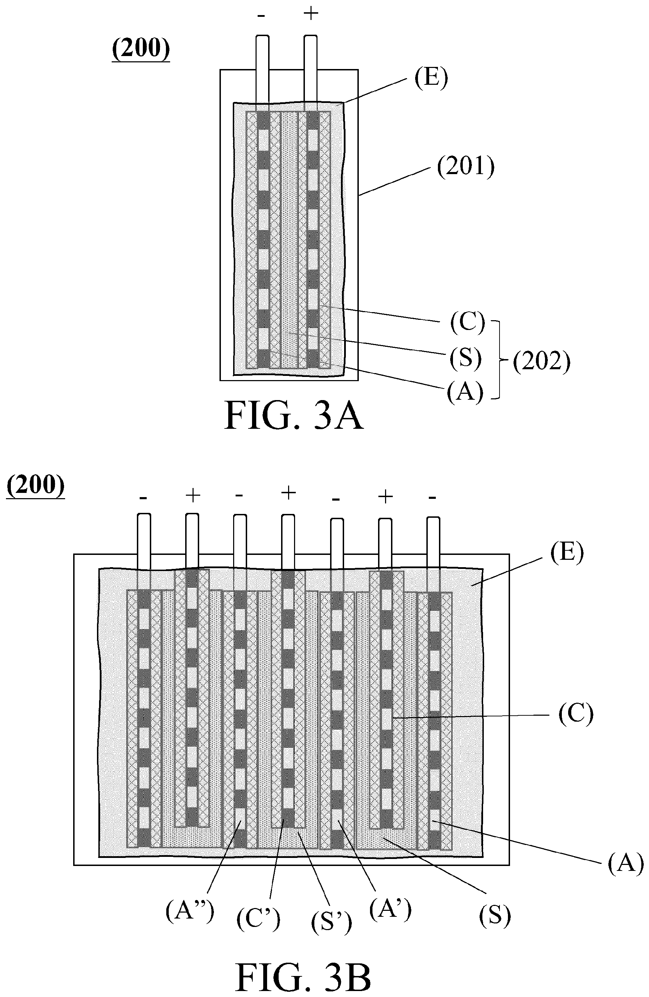

In another aspect, as shown in Fig. 3A, the present invention provides a lead-acid battery (200) comprising: a seal case (201); an electrode plate stack (202) sealed in the seal case (201), comprising: a separator (S); a positive electrode plate (C) comprising the lead-acid battery electrode plate (100), provided on one side of the separator (S); a negative electrode plate (A) comprising the lead-acid battery electrode plate (100), provided on the other side of the separator (S) in a corresponding manner to the positive electrode plate (C); and an electrolyte solution (E) sealed in the seal case and immersing the electrode plate stack (202).

In some embodiments, the electrolyte (E) is an aqueous acidic solution, generally an aqueous sulfuric acid solution, and a 30 to 40wt% aqueous sulfuric acid solution is preferred. Please refer to Fig. 3B illustrating another embodiment of the lead-acid battery (200), the components thereof are the same as described hereinabove, wherein another negative electrode plate (A') is provided on the other side of the positive electrode plate (C) corresponding to the negative electrode plate (A), and the another negative electrode plate (A') comprises the lead-acid battery electrode plate (100); another positive electrode plate (C') is provided on the other side of the another negative electrode plate (A') corresponding to the positive electrode plate (C), and the another positive electrode plate (C') comprises the lead-acid battery electrode plate (100); yet another negative electrode plate (A") is provided on the other side of the another positive electrode plate (C') corresponding to the another negative electrode plate (A'), and the yet another negative electrode plate (A") comprises the lead-acid battery electrode plate (100). The present embodiment is not limited to this, the lead-acid battery (200) with larger electric capacity can be obtained by stacking the electrode plates and the separators repeatedly and alternatively according to the aforementioned configuration, in accordance to the needs.

In some embodiments, preferably, any one of the positive electrode plates (C, C') is enclosed by the separators (S) so that the positive electrode (C, C') is isolated from the negative plate (A, A', A") adjacent the positive electrode (C, C').

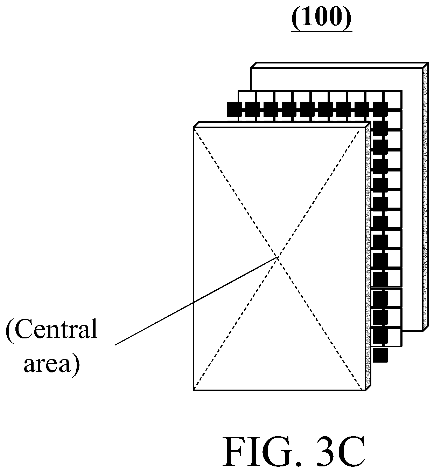

To be specific, the lead-acid battery (200) provided in the present invention demonstrates lower pure hydration in central area of the electrode plate than that of a conventional lead-acid battery during a manufacturing process. In other words, the disparity in electrolyte concentration between central area and surrounding area of the lead-acid electrode plate (100) is smaller in comparison with that of a conventional lead-acid battery. The "central area" is geometric center of the electrolyte-contacting surface of the electrode plate, and "surrounding area" is the outermost perimeter defining the electrode plate. Comprehensibly, the shape of the electrode plate is not limited, and it can be a square, a round or any type of polygon, while the central area can be just defined in accordance to the definition of a polygonal geometric center in geometry. As shown in Fig. 3C, in this example the electrode plate is a rectangle, and the central area is the intersectional area of two diagonal lines, and the surrounding area is the area neighboring outer perimeter of the electrode plate. In some embodiments, in area neighboring the central area of the electrode plate, the electrolyte (E) dissolves acidic electrolyte at a first concentration, and in area neighboring the surrounding area of the electrode plate, the electrolyte (E) dissolves acidic electrolyte at a second concentration, and the first concentration is lower than or equivalent to the second concentration, wherein a ratio of the first concentration to the second concentration is 1: (1 to 1.04); preferably, the ratio of the first concentration to the second concentration is 1: (1 to 1.03).

In some embodiments, the separator (S) comprises a material selected from a group consisting of absorbent glass mat, polyvinyl chloride, polyolefin and non-woven fiber glass mat. In preferred embodiments, the separator (S) is made of absorbent glass mat.

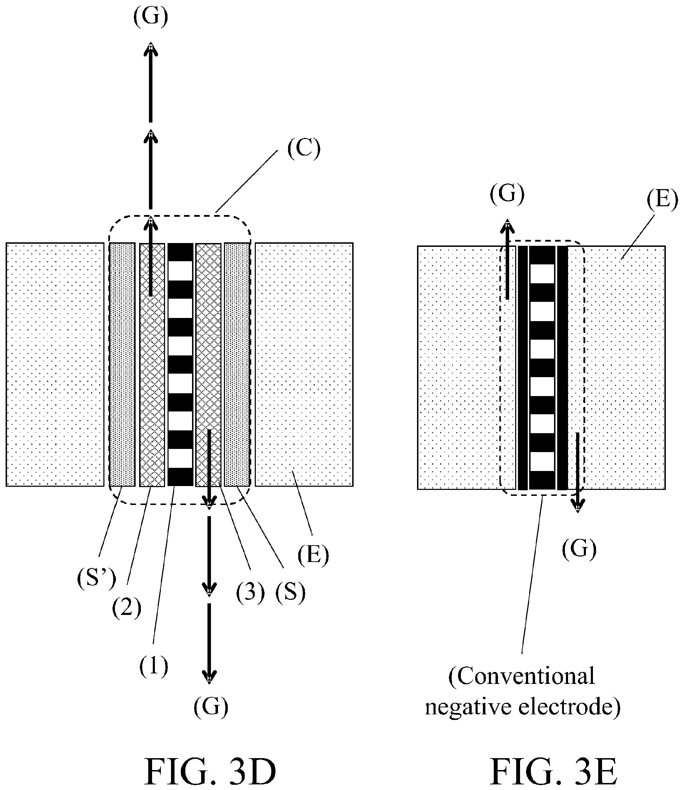

Please refer to Figs. 3D to 3E illustrating the gas ventilation of the lead-acid battery electrode plate (100) during charge and discharge, and the gas ventilation of the electrode plate in a conventional lead-acid battery, respectively. As shown in Fig. 3D, the lead-acid battery electrode plate (100) can rapidly ventilate gas (G) produced in a charge-discharge reaction in that two air-permeable layers of non-metallic materials interwoven with fiber materials are provided, which provides ventilation channels between the separator (S) and the electricity collector layer (1). Heat accumulation is reduced and consumption of electrode plate is also minimized. On the contrary, the electrode plate in a conventional lead-acid battery without the ventilation channels provided by interwoven fiber materials, as shown in Fig. 3E, ventilates the gas (G) in a slower manner in the charge-discharge reaction. Pure hydration tends to be observed in central area of the electrode plate due to reaction of hydrogen and oxygen, which results in lead sulfate crystallization and accumulation in the central area after a reductive reaction. Eventually, lead dendrites growing along with crystallization would gradually pierce through the separator (S) and leads to battery short circuit.

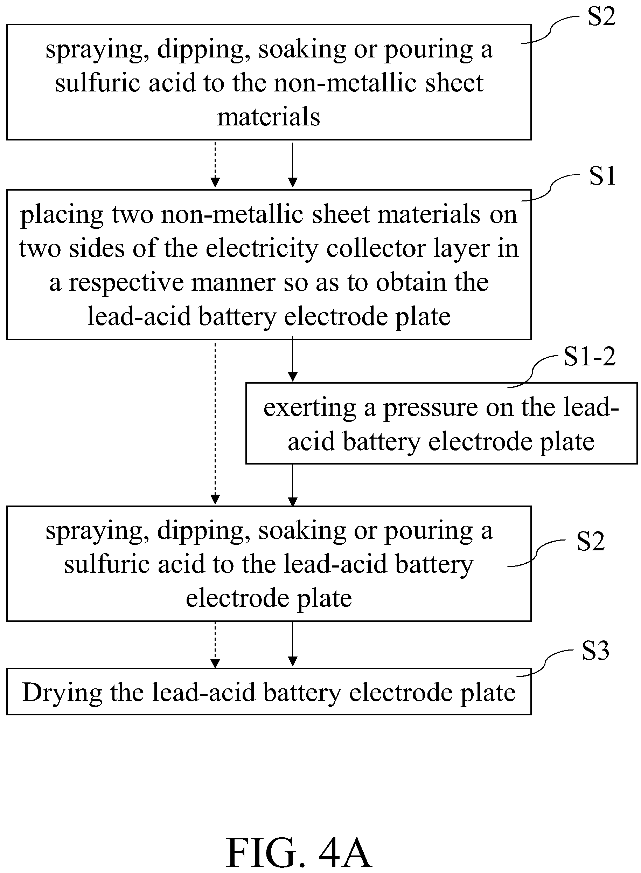

In yet another aspect, the present invention provides a method for making an lead-acid battery electrode plate, as shown in Fig. 4A, comprising:
Step S1: placing one first non-metallic sheet material (NM1) and one second non-metallic sheet material (NM2) on two sides of the electricity collector layer (1) in a respective manner so as to obtain the lead-acid battery electrode plate (100), wherein the first non-metallic sheet material (NM1) and the second non-metallic sheet material (NM2) have porous structures to be air-permeable channels of a first air-permeable layer (2) and a second air-permeable layer (3), and the first air-permeable layer (2) is the same as or different from the second air-permeable layer (3).

In some embodiments, please continue to refer to FIG. 4A, the method further comprises:
Step S1-2: exerting a pressure on the lead-acid battery electrode plate (100) so as to laminate the electricity collector layer (1), the first non-metallic sheet material (NM1) and the second non-metallic sheet material (NM2) in a more compact manner, wherein the pressurizing procedure can be squeezing, rolling, or compressing by a compressor.

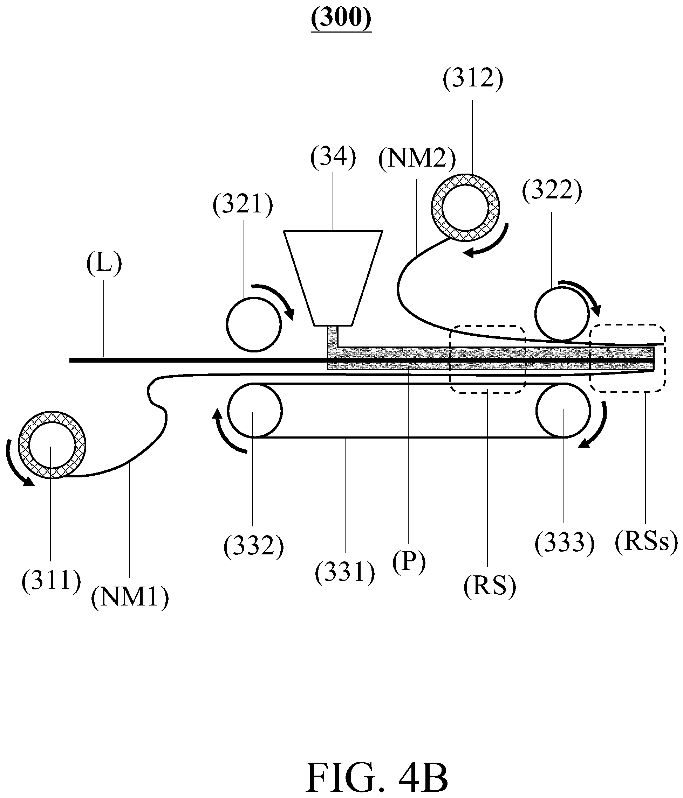

Please further refer to Fig. 4B illustrating a continuous roller manufacturing process of the lead-acid battery electrode plate (100) in one example. In this example, a raw electrode plate (RS) is roller-pressed through a roller system (300) to obtain an electrode plate strip (RSs), wherein the roller system (300) comprises a feeding device (31), a roller-pressing device (32) and a delivery device (33); the feeding device (31) feeds a lead grid (L) to a delivery belt (331), the first non-metallic sheet material (NM1) is fed from a first scroll (311) thereof to be placed between the delivery belt (331) and the lead grid (L) by the feeding device. Subsequently, a first rolling unit (321) is used to compactly press the lead grid (L) and the first non-metallic sheet material on the delivery belt (331) upon a first roller (332). The second non-metallic sheet material (NM2) is fed from a second scroll (312) onto top side of the lead grid (L), and a second rolling unit (322) is used to compactly press, sequentially top to bottom, the second non-metallic sheet material (NM2), the lead grid (L) and the first non-metallic sheet material (NM1) on the delivery belt (331) upon a second roller (333). Then, the compacted electrode strip (RSs) is cut into the lead-acid battery electrode plate (100) according to needs.

Moreover, the roller system (300) further comprises a material supplying device (34) for allocating a lead paste (P) to the lead grid (L). The material supplying device (34) pours the lead paste (P) into each grid opening (O), and the lead paste (P) penetrates the lead grid (L) so as to envelope both sides of the lead grid (L). In this example, the raw electrode plate (RS) comprises, sequentially top to bottom, the first non-metallic sheet material (NM1), the lead grid (L)-the lead paste (P), the second non-metallic sheet material (NM2), and compactly pressed by the second rolling unit (322) on the delivery belt (331) upon the second roller (333) so as to form the electrode plate strip (RSs). Subsequently, the electrode plate strip (RSs) is cut into an individual lead-acid battery electrode plate (100), and dried, stored, and solidified so as for assembling a lead-acid battery.

In some other embodiments, please continue on Fig. 4A, the method further comprising:
Step S2: spraying, dipping, soaking or pouring a sulfuric acid to the first non-metallic sheet material (NM1), the second non-metallic sheet material (NM2) or the lead-acid battery electrode plate (100); and
Step S3: drying the first non-metallic sheet material (NM1), the second non-metallic sheet material (NM2) or the lead-acid battery electrode plate (100) after the acidifying process at a drying temperature for a drying time, wherein the drying temperature is higher than or equal to room temperature.

### Embodiment 1

Preparing an unformed electrode plate sizing 23.9 cm in length, 16.2 cm in width, and 0.3 cm in thickness, and 2 pieces of non-metallic sheet materials having 2 cm thickness. Placing the unformed electrode plate between the 2 pieces of non-metallic sheet materials to obtain an electrode plate having air-permeable layers, wherein the non-metallic materials comprises carbon fibers and ceramic fibers.

### Comparative example 1

Preparing an unformed electrode plate sizing 23.9 cm in length, 16.2 cm in width, and 0.3 cm in thickness.

### Experimental example 1

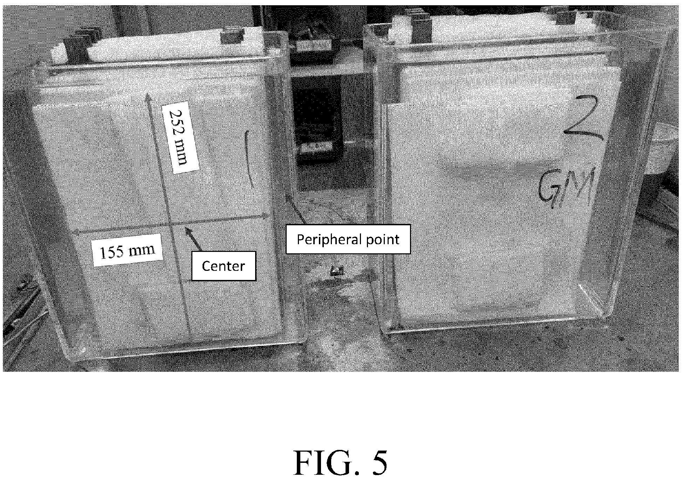

Electrode plates in the embodiment 1 and the comparative example 1 were applied as the positive electrode plate (C) and the negative electrode plate (A). The positive electrode plate (C) was enclosed by the separator (S), and alternatively stacked with the negative electrode plate (A) into an electrode plate stack. The electrode plate stack was placed into a battery seal case to form a lead-acid battery. The seal case was filled with aqueous sulfuric acid solution at concentration of 1.28M, and the electrode plate stack was immersed in the aqueous sulfuric acid solution for 40 minutes. Temperature of the aqueous sulfuric acid solution was measured around 40°C. Probe of a densimeter reached the central area of the positive electrode plate (C) and the negative electrode plate (A), respectively, and reached surrounding area neighboring the electrode plate stack periphery fin order to measure concentrations of aqueous sulfuric acid solution. Pure hydration status could be determined through observing aqueous sulfuric acid concentration variations in central area of the electrode plate. Fig. 5 illustrates the position where the concentration of aqueous sulfuric acid solution is measured, and the central area is the position where geometric center of the electrode plate lies at.

**TABLE 1**

| | Central area of positive electrode plate | Central area of negative electrode plate | Percentage decrease (%) | |
|---|---|---|---|---|
| | | | positive electrode plate | negative electrode plate |
| comparative example 1 | 1.189M | 1.205M | 7.1 | 4.0 |
| embodiment 1 | 1.205M | 1.237M | 5.8 | 3.3 |

As shown in TABLE 1, compared with the initial concentration of aqueous sulfuric acid solution in central area of the electrode plate, in both cases where embodiment 1 was applied as the positive electrode plate or the negative electrode plate, the percentage decrease was lower (5.8% and 3.3%, respectively) in comparison with to the percentage decrease (7.1% and 4.0%, respectively) observed in comparative example 1.

**TABLE 2**

| | Central area of positive electrode plate | Central area of negative electrode plate | Surrounding area of the electrode plate stack | Ratio of the concentrations | |
|---|---|---|---|---|---|
| | | | | + | - |
| comparative example 1 | 1.189M | 1.205M | 1.229M | 1.034 | 1.019 |
| embodiment 1 | 1.205M | 1.237M | 1.237M | 1.027 | 1.000 |

Moreover, please refer to TABLE 2, compared with the concentration of aqueous sulfuric acid solution in surrounding area of the electrode plate stack, in both cases where embodiment 1 was applied as the positive electrode plate or the negative electrode plate, the concentration ratio of central area to surrounding area was lower (1.027 and 1.000, respectively) in comparison with the concentration ratio of central area to surrounding area (1.034 and 1.019, respectively) observed in comparative example 1. The disparity in concentrations of the aqueous sulfuric acid solution between the central area and the surrounding area of the embodiment 1 was smaller. This demonstrates that the addition of non-metallic sheet materials to the embodiment 1 helped to more efficiently maintain the concentration of the aqueous sulfuric acid solution in central area of the electrode plate. This improvement addresses the pure hydration issues in central area of the electrode plate.

### Experimental example 2

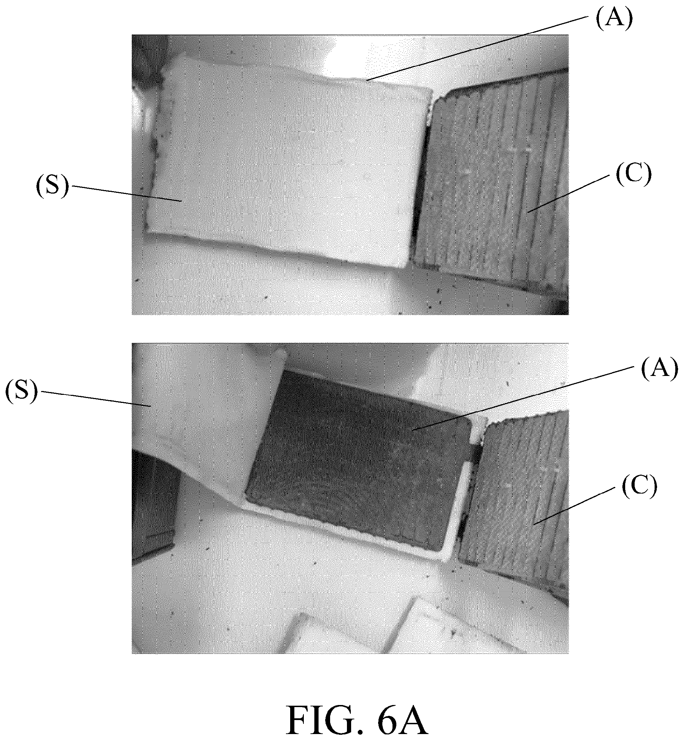

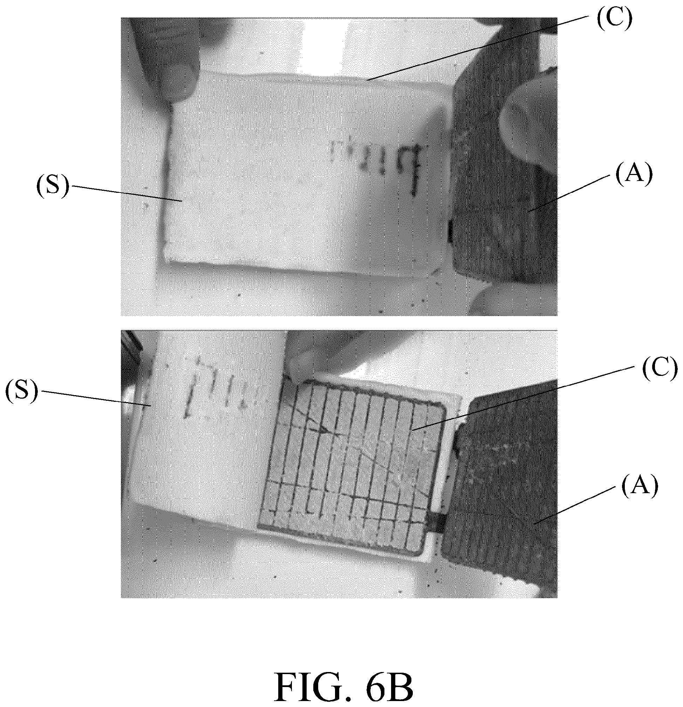

Electrode plates prepared in embodiment 1 and comparative example 1 were applied as positive electrode plates or negative electrode plates for assembling lead-acid batteries. The lead-acid batteries were charged at a constant current of 0.17C and discharged at a constant current of 0.25C repeatedly for 3 times. Subsequently, surfaces of the electrode plates were observed whether there was lead sulfate dendrite growth or not. As shown in FIG. 6A, no surface lead sulfate dendrite growth was observed in electrode plate of the embodiment 1 after cyclic charge and discharge, and the separator remained in original color and not pierced through by any crystal dendrite. As shown in FIG. 6B, significant surface lead sulfate dendrite growth was observed in electrode plates of the comparative example 1, and the separator was penetrated by the lead sulfate dendrite, showing a deep-grey belt thereon.

The lead-acid electrode plate provided in the present invention demonstrates improvement of its air permeability by substituting conventional paste paper for the non-metallic sheet materials. During charge and discharge of the battery, the lead-acid electrode plate could more efficiently ventilate gases produced in electrochemical reaction in comparison with the electrode plate using conventional paste paper. Therefore, electrolyte solution could move more rapidly from surrounding area to central area of the lead-acid electrode plate, and slows down concentration decrease in the central area. Such improvement addresses pure hydration issues in central area of the lead-acid electrode plate. Meanwhile, battery damage owing to interior swelling pressure could be avoided. Surface vulcanization of the lead-acid battery can also be minimized to prevent battery short circuit resulting from lead dendrite.

The lead-acid electrode plate provided in the present invention exhibits superior characteristics compared to conventional paste paper. It not only enables efficient ventilation but also demonstrates excellent electrical conductivity and increased electric capacity. This is achieved by incorporating electrical conductive materials into the non-metallic sheet material. Along with increased electrical conductivity, formation efficiency of the lead-acid battery is also improved so that the lead-acid battery can be put into subsequent application more quickly. Furthermore, the incorporation of electrical conductive materials into the non-metallic sheet material helps reduce surface vulcanization. This reduction allows for the maintenance of a constant working area even after multiple cycles of charge and discharge. As a result, the battery exhibits improved long-term working efficiency with less decline over time, and the lifespan of the battery is also significantly prolonged.

Fibers of the non-metallic sheet materials are not interwoven in a perpendicular manner, which not only creates more channels for electrolyte solution flow, but also addresses pure hydration issues in central area of the lead-acid electrode plate by incorporation of the non-electrical conductive fiber materials to the electrical conductive fiber materials.

## Claims

1. A lead-acid battery electrode plate for preventing lead sulfate dendrite growth and enhancing batter formation efficiency, comprising:
a electricity collector layer provided to be an electricity channel;
a first air-permeable layer comprising a non-metallic sheet material and provided on one side of the electricity collector layer; and a second air-permeable layer comprising a non-metallic sheet material and provided on other side of the electricity collector layer in a corresponding manner to the first air-permeable layer, wherein the non-metallic sheet material has a porous structure to be air-permeable channels, and the first air-permeable layer is the same as or different from the second air-permeable layer, wherein the porous structure comprises a combination of an electrical conductive material comprising one or more materials selected from a group consisting of electrical conductive polymers, nanocarbon, graphite and graphene; and
a corrosion-resistant material comprising one or more materials selected from a group consisting of polypropylene fiber, polyethylene fiber, polyester fiber, nylon fiber, aramid fiber, polyvinyl chloride fiber, acrylic fiber, viscose fiber, glass fiber, spandex fiber, carbon fiber, polyacrylate fiber and polyimide fiber, and
wherein the porous structure is a fabric braid comprising a fabric braid woven from long electrical conductive fiber materials and long corrosion-resistant fiber materials, or a fabric braid woven from long electrical conductive fiber materials, short electrical conductive fiber materials, long corrosion-resistant fiber materials and short corrosion-resistant fiber materials.

2. The lead-acid battery electrode plate according to claim 1, wherein the porous structure comprises one or more interwoven layers, the interwoven layers are made by interweaving a plurality of latitudinal threads and a plurality of longitudinal threads, wherein an intersection angle formed between any one of the latitudinal threads intersecting with any one of the longitudinal threads is an acute angle or an obtuse angle.

3. The lead-acid battery electrode plate according to claim 1, wherein the electrical conductive material comprises one or more materials selected from a group consisting of electrical conductive polymers, nanocarbon, graphite and graphene, and the corrosion-resistant material comprises glass fiber.

4. The lead-acid battery electrode plate according to claim 1, wherein thickness of the first air-permeable layer ranges from 0.1 to 0.4 mm, and thickness of the second air-permeable layer ranges from 0.1 to 0.4 mm.

5. A lead-acid battery comprising:
a seal case;
an electrode plate stack, sealed in the seal case, comprising:
a separator;
a positive electrode plate comprising the lead-acid battery electrode plate according to any one of claims 1 to 4, provided on one side of the separator; and
a negative electrode plate comprising the lead-acid battery electrode plate according to any one of claims 1 to 4, provided on the other side of the separator in a corresponding manner to the positive electrode plate; and
an electrolyte solution, sealed in the seal case and immersing the electrode plate stack, dissolving acidic electrolyte.

6. A method for making a lead-acid battery electrode plate comprising:
placing one first non-metallic sheet material and one second non-metallic sheet material on two sides of the electricity collector layer in a respective manner so as to obtain the lead-acid battery electrode plate, wherein the first non-metallic sheet material and the second non-metallic sheet material have porous structures to be air-permeable channels of a first air-permeable layer and a second air-permeable layer, and the first air-permeable layer is the same as or different from the second air-permeable layer, wherein the porous structure comprises a combination of:
an electrical conductive material comprising one or more materials selected from a group consisting of electrical conductive polymers, nanocarbon, graphite and graphene; and
a corrosion-resistant material comprising one or more materials selected from a group consisting of polypropylene fiber, polyethylene fiber, polyester fiber, nylon fiber, aramid fiber, polyvinyl chloride fiber, acrylic fiber, viscose fiber, glass fiber, spandex fiber, carbon fiber, polyacrylate fiber and polyimide fiber; and
wherein the porous structure is a fabric braid comprising a fabric braid woven from long electrical conductive fiber materials and long corrosion-resistant fiber materials, or a fabric braid woven from long electrical conductive fiber materials, short electrical conductive fiber materials, long corrosion-resistant fiber materials and short corrosion-resistant fiber materials.

7. The method according to claim 6, further comprising exerting a pressure on the lead-acid battery electrode plate so as to laminate the electricity collector layer, the first non-metallic sheet material and the second non-metallic sheet material in a more compact manner, wherein the pressurizing procedure can be squeezing, rolling, or compressing by a compressor.

8. The method according to claim 7, wherein the exerting pressure step is performed with a roller system.

9. The method according to claim 6, before or after obtaining the lead-acid battery electrode plate, the method further comprising:
spraying, dipping, soaking or pouring a sulfuric acid to the first non-metallic sheet material, the second non-metallic sheet material or the lead-acid battery electrode plate; and
drying the first non-metallic sheet material, the second non-metallic sheet material or the lead-acid battery electrode plate at a drying temperature for a drying time, wherein the drying temperature is higher than or equal to room temperature.

10. The method according to claim 6, wherein the porous structure comprises one or more interwoven layers, the interwoven layers are made by interweaving a plurality of latitudinal threads and a plurality of longitudinal threads, wherein an intersection angle formed between any one of the latitudinal threads intersecting with any one of the longitudinal threads is an acute angle or an obtuse angle.

11. The method according to claim 7, wherein the electrical conductive material comprises one or more materials selected from a group consisting of electrical conductive polymers, nanocarbon, graphite and graphene, and the corrosion-resistant material comprises glass fiber.

12. The method according to claim 6, after obtaining the lead-acid battery electrode plate, wherein thickness of the first air-permeable layer ranges from 0.1 to 0.4 mm, and thickness of the second air-permeable layer ranges from 0.1 to 0.4 mm.

## Patentansprüche

1. Blei-Säure-Batterie-Elektrodenplatte zum Verhindern von Bleisulfatdendrit-Wachstum und Verbessern von Batteriebildungseffizienz, umfassend:
eine Stromsammelschicht, die als Stromkanal bereitgestellt ist;
eine erste luftdurchlässige Schicht, umfassend ein nichtmetallisches Folienmaterial und die auf einer Seite der Stromsammelschicht bereitgestellt ist; und
eine zweite luftdurchlässige Schicht, umfassend ein nichtmetallisches Folienmaterial und die auf der anderen Seite der Stromsammelschicht auf eine der ersten luftdurchlässigen Schicht entsprechenden Weise bereitgestellt ist, wobei das nichtmetallische Folienmaterial eine poröse Struktur aufweist, um luftdurchlässige Kanäle zu sein, und die erste luftdurchlässige Schicht gleiche wie die zweite luftdurchlässige Schicht ist oder sich davon unterscheidet, wobei die poröse Struktur eine Kombination aus einem elektrisch leitenden Material umfasst, umfassend ein oder mehrere Materialien, die ausgewählt sind aus einer Gruppe, bestehend aus elektrisch leitenden Polymeren, Nanokohlenstoff, Graphit und Graphen; und
ein korrosionsbeständiges Material, umfassend ein oder mehrere Materialien, die ausgewählt sind aus einer Gruppe, bestehend aus Polypropylenfasern, Polyethylenfasern, Polyesterfasern, Nylonfasern, Aramidfasern, Polyvinylchloridfasern, Acrylfasern, Viskosefasern, Glasfasern, Spandexfasern, Kohlenstofffasern, Polyacrylatfasern und Polyimidfasern, und
wobei die poröse Struktur ein Gewebegeflecht ist, umfassend ein aus langen elektrisch leitenden Fasermaterialien und langen korrosionsbeständigen Fasermaterialien gewebtes Gewebegeflecht oder ein aus langen elektrisch leitenden Fasermaterialien, kurzen elektrisch leitenden Fasermaterialien, langen korrosionsbeständigen Fasermaterialien und kurzen korrosionsbeständigen Fasermaterialien gewebtes Gewebegeflecht.

2. Blei-Säure-Batterie-Elektrodenplatte nach Anspruch 1, wobei die poröse Struktur eine oder mehrere verwobene Schichten umfasst, wobei die verwobenen Schichten durch Verweben einer Vielzahl von Querfäden und einer Vielzahl von Längsfäden gefertigt sind, wobei ein Schnittwinkel, Breitenfäden der zwischen einem beliebigen der Breitenfäden, die sich mit einem der Längsfäden kreuzen, gebildet ist, ein spitzer Winkel oder ein stumpfer Winkel ist.

3. Blei-Säure-Batterie-Elektrodenplatte nach Anspruch 1, wobei das elektrisch leitende Material ein oder mehrere Materialien umfasst, die ausgewählt sind aus einer Gruppe, bestehend aus elektrisch leitenden Polymeren, Nanokohlenstoff, Graphit und Graphen, und das korrosionsbeständige Material Glasfasern umfasst.

4. Blei-Säure-Batterie-Elektrodenplatte nach Anspruch 1, wobei eine Stärke der ersten luftdurchlässigen Schicht in einem Bereich von 0,1 bis 0,4 mm ist und eine Stärke der zweiten luftdurchlässigen Schicht in einem Bereich von 0,1 bis 0,4 mm ist.

5. Blei-Säure, umfassend:
ein Abdichtungsgehäuse;
einen Elektrodenplattenstapel, der in dem Abdichtungsgehäuse versiegelt ist, umfassend
ein Trennelement;
eine positive Elektrodenplatte, umfassend die Blei-Säure-Batterie-Elektrodenplatte nach einem der Ansprüche 1 bis 4, die auf einer Seite des Trennelements bereitgestellt ist; und
eine negative Elektrodenplatte, umfassend die Blei-Säure-Batterie-Elektrodenplatte nach einem der Ansprüche 1 bis 4, die auf der anderen Seite des Trennelements auf eine der positiven Elektrodenplatte entsprechende Weise bereitgestellt ist; und
eine Elektrolytlösung, die im Abdichtungsgehäuse versiegelt ist und in den Elektrodenplattenstapel eintaucht, und den sauren Elektrolyten auflöst.

6. Verfahren zum Fertigen einer Blei-Säure-Batterie-Elektrodenplatte, umfassend:
Platzieren eines ersten nichtmetallischen Folienmaterials und eines zweiten nichtmetallischen Folienmaterials auf zwei Seiten der Stromsammelschicht auf eine entsprechende Weise, um die Blei-Säure-Batterie-Elektrodenplatte zu erlangen, wobei das erste nichtmetallische Folienmaterial und das zweite nichtmetallische Folienmaterial poröse Strukturen aufweisen, um luftdurchlässige Kanäle einer ersten luftdurchlässigen Schicht und einer zweiten luftdurchlässigen Schicht zu sein, und die erste luftdurchlässige Schicht gleich wie die zweite luftdurchlässige Schicht oder davon verschieden ist, wobei die poröse Struktur eine Kombination von Folgendem umfasst:
einem elektrisch leitenden Material, umfassend ein oder mehrere Materialien, die ausgewählt sind aus einer Gruppe, bestehend aus elektrisch leitenden Polymeren, Nanokohlenstoff, Graphit und Graphen; und
einem korrosionsbeständigen Material, umfassend ein oder mehrere Materialien, die ausgewählt sind aus einer Gruppe, bestehend aus Polypropylenfasern, Polyethylenfasern, Polyesterfasern, Nylonfasern, Aramidfasern, Polyvinylchloridfasern, Acrylfasern, Viskosefasern, Glasfasern, Spandexfasern, Kohlenstofffasern, Polyacrylatfasern und Polyimidfasern, und
wobei die poröse Struktur ein Gewebegeflecht ist, umfassend ein aus langen elektrisch leitenden Fasermaterialien und langen korrosionsbeständigen Fasermaterialien gewebtes Gewebegeflecht oder ein aus langen elektrisch leitenden Fasermaterialien, kurzen elektrisch leitenden Fasermaterialien, langen korrosionsbeständigen Fasermaterialien und kurzen korrosionsbeständigen Fasermaterialien gewebtes Gewebegeflecht.

7. Verfahren nach Anspruch 6, ferner umfassend ein Ausüben eines Drucks auf die Blei-Säure-Batterie-Elektrodenplatte, um die Stromsammelschicht, das erste nichtmetallische Folienmaterial und das zweite nichtmetallische Folienmaterial kompakter zu laminieren, wobei das Druckbeaufschlagungsverfahren Quetschen, Rollen oder Komprimieren durch einen Kompressor sein kann.

8. Verfahren nach Anspruch 7, wobei der Schritt des Druckausübungsschritt mit einem Rollensystem durchgeführt wird.

9. Verfahren nach Anspruch 6, vor oder nach Erlangen der Blei-Säure-Batterie-Elektrodenplatte, das Verfahren ferner umfassend:
besprühen, Eintauchen, Tränken oder Ausgießen des ersten nichtmetallischen Folienmaterials, des zweiten nichtmetallischen Folienmaterials oder der Blei-Säure-Batterie-Elektrodenplatte mit einer Schwefelsäure, und
Trocknen des ersten nichtmetallischen Folienmaterials, des zweiten nichtmetallischen Folienmaterials oder der Blei-Säure-Batterie-Elektrodenplatte bei einer Trocknungstemperatur über eine Trocknungszeit, wobei die Trocknungstemperatur höher als oder gleich wie die Raumtemperatur ist.

10. Verfahren nach Anspruch 6, wobei die poröse Struktur eine oder mehrere miteinander verwobene Schichten umfasst, wobei die verwobenen Schichten durch Verweben einer Vielzahl von Breitenfäden und einer Vielzahl von Längsfäden gefertigt sind, wobei ein Schnittwinkel, der zwischen einem beliebigen der Breitenfäden, die sich mit einem der Längsfäden kreuzen, gebildet ist, ein spitzer Winkel oder ein stumpfer Winkel ist.

11. Verfahren nach Anspruch 7, wobei das elektrisch leitende Material ein oder mehrere Materialien umfasst, die ausgewählt sind aus einer Gruppe, bestehend aus elektrisch leitenden Polymeren, Nanokohlenstoff, Graphit und Graphen, und das korrosionsbeständige Material Glasfasern umfasst.

12. Verfahren nach Anspruch 6, nach Erlangen der Blei-Säure-Batterie-Elektrodenplatte, wobei eine Stärke der ersten luftdurchlässigen Schicht in einem Bereich von 0,1 bis 0,4 mm ist und eine Stärke der zweiten luftdurchlässigen Schicht in einem Bereich von 0,1 bis 0,4 mm ist.

## Revendications

1. Plaque d'électrode de batterie au plomb-acide pour empêcher la croissance de dendrites de sulfate de plomb et améliorer l'efficacité de formation de batterie, comprenant :
une couche collectrice d'électricité prévue pour être un canal d'électricité ;
une première couche perméable à l'air comprenant un matériau en feuille non métallique et disposée sur un côté de la couche collectrice d'électricité ; et
une seconde couche perméable à l'air comprenant un matériau en feuille non métallique et disposée sur un autre côté de la couche collectrice d'électricité de manière correspondante avec la première couche perméable à l'air, le matériau en feuille non métallique ayant une structure poreuse pour constituer des canaux perméables à l'air, et la première couche perméable à l'air étant identique à ou différente de la seconde couche perméable à l'air, la structure poreuse comprenant une combinaison d'un matériau conducteur d'électricité comprenant un ou plusieurs matériaux choisis dans un groupe consistant en polymères conducteurs d'électricité, nanocarbone, graphite et graphène ; et
un matériau résistant à la corrosion comprenant un ou plusieurs matériaux choisis dans un groupe consistant en fibre de polypropylène, fibre de polyéthylène, fibre de polyester, fibre de nylon, fibre d'aramide, fibre de poly(chlorure de vinyle), fibre acrylique, fibre de viscose, fibre de verre, fibre spandex, fibre de carbone, fibre de polyacrylate et fibre de polyimide, et
dans laquelle la structure poreuse est une tresse en tissu comprenant une tresse en tissu tissée à partir de matériaux à fibres longues conductrices d'électricité et de matériaux à fibres longues résistantes à la corrosion, ou une tresse en tissu tissée à partir de matériaux à fibres longues conductrices d'électricité, de matériaux à fibres courtes conductrices d'électricité, de matériaux à fibres longues résistantes à la corrosion et de matériaux à fibres courtes résistantes à la corrosion.

2. Plaque d'électrode de batterie au plomb-acide selon la revendication 1, dans laquelle la structure poreuse comprend une ou plusieurs couches entrelacées, les couches entrelacées étant réalisées par l'entrecroisement d'une pluralité de fils latitudinaux et d'une pluralité de fils longitudinaux, un angle d'intersection formé entre l'un quelconque des fils latitudinaux croisant l'un quelconque des fils longitudinaux étant un angle aigu ou un angle obtus.

3. Plaque d'électrode de batterie au plomb-acide selon la revendication 1, dans laquelle le matériau conducteur d'électricité comprend un ou plusieurs matériaux choisis dans un groupe consistant en polymères conducteurs d'électricité, nanocarbone, graphite et graphène, et le matériau résistant à la corrosion comprend de la fibre de verre.

4. Plaque d'électrode de batterie au plomb-acide selon la revendication 1, dans laquelle l'épaisseur de la première couche perméable à l'air va de 0,1 à 0,4 mm, et l'épaisseur de la seconde couche perméable à l'air va de 0,1 à 0,4 mm.

5. Batterie au plomb-acide comprenant :
un boîtier d'étanchéité :
une pile de plaques d'électrode, scellée de manière étanche dans le boîtier d'étanchéité, comprenant :
un séparateur ;
une plaque d'électrode positive comprenant la plaque d'électrode de batterie au plomb-acide selon l'une quelconque des revendications 1 à 4, disposée sur un côté du séparateur ; et
une plaque d'électrode négative comprenant la plaque d'électrode de batterie au plomb-acide selon l'une quelconque des revendications 1 à 4, disposée sur l'autre côté du séparateur de manière correspondante avec la plaque d'électrode positive ; et
une solution électrolytique, scellée de manière étanche dans le boîtier d'étanchéité et immergeant la pile de plaques d'électrode, dissolvant un électrolyte acide.

6. Procédé de fabrication d'une plaque d'électrode de batterie au plomb-acide comprenant :
placer un premier matériau en feuille non métallique et un second matériau en feuille non métallique sur deux côtés de la couche collectrice d'électricité de manière respective afin d'obtenir la plaque d'électrode de batterie au plomb-acide, le premier matériau en feuille non métallique et le second matériau en feuille non métallique ayant des structures poreuses afin de constituer des canaux perméables à l'air d'une première couche perméable à l'air et d'une seconde couche perméable à l'air, et la première couche perméable à l'air étant identique à ou différente de la seconde couche perméable à l'air, la structure poreuse comprenant une combinaison de :
un matériau conducteur d'électricité comprenant un ou plusieurs matériaux choisis dans un groupe consistant en polymères conducteurs d'électricité, nanocarbone, graphite et graphène ; et
un matériau résistant à la corrosion comprenant un ou plusieurs matériaux choisis dans un groupe consistant en fibre de polypropylène, fibre de polyéthylène, fibre de polyester, fibre de nylon, fibre d'aramide, fibre de poly(chlorure de vinyle), fibre acrylique, fibre de viscose, fibre de verre, fibre spandex, fibre de carbone, fibre de polyacrylate et fibre de polyimide ; et
dans lequel la structure poreuse est une tresse en tissu comprenant une tresse en tissu tissée à partir de matériaux à fibres longues conductrices d'électricité et de matériaux à fibres longues résistantes à la corrosion, ou une tresse en tissu tissée à partir de matériaux à fibres longues conductrices d'électricité, de matériaux à fibres courtes conductrices d'électricité, de matériaux à fibres longues résistantes à la corrosion et de matériaux à fibres courtes résistantes à la corrosion.

7. Procédé selon la revendication 6, comprenant en outre : exercer une pression sur la plaque d'électrode de batterie au plomb-acide de manière à laminer la couche collectrice d'électricité, le premier matériau en feuille non métallique et le second matériau en feuille non métallique de manière plus compacte, la procédure de pressurisation pouvant être un écrasement, un laminage ou une compression par un compresseur.

8. Procédé selon la revendication 7, dans lequel l'étape consistant à exercer une pression est réalisée avec un système de rouleaux.

9. Procédé selon la revendication 6, avant ou après l'obtention de la plaque d'électrode de batterie au plomb-acide, le procédé comprenant en outre :
pulvériser, plonger, tremper ou verser un acide sulfurique sur le premier matériau en feuille non métallique, le second matériau en feuille non métallique ou la plaque d'électrode de batterie au plomb-acide ; et
sécher le premier matériau en feuille non métallique, le second matériau en feuille non métallique ou la plaque d'électrode de batterie au plomb-acide à une température de séchage pendant une durée de séchage, la température de séchage étant supérieure ou égale à la température ambiante.

10. Procédé selon la revendication 6, dans lequel la structure poreuse comprend une ou plusieurs couches entrelacées, les couches entrelacées étant réalisées par l'entrecroisement d'une pluralité de fils latitudinaux et d'une pluralité de fils longitudinaux, un angle d'intersection formé entre l'un quelconque des fils latitudinaux croisant l'un quelconque des fils longitudinaux étant un angle aigu ou un angle obtus.

11. Procédé selon la revendication 7, dans lequel le matériau conducteur d'électricité comprend un ou plusieurs matériaux choisis dans un groupe consistant en polymères conducteurs d'électricité, nanocarbone, graphite et graphène, et le matériau résistant à la corrosion comprend de la fibre de verre.

12. Procédé selon la revendication 6, après l'obtention de la plaque d'électrode de batterie au plomb-acide, dans lequel l'épaisseur de la première couche perméable à l'air va de 0,1 à 0,4 mm, et l'épaisseur de la seconde couche perméable à l'air va de 0,1 à 0,4 mm.
